# EUROPEAN PATENT SPECIFICATION

(11) **EP 4 396 411 B1**
(45) Date of publication and mention of the grant of the patent: **04.06.2025**
(21) Application number: 22772527.2
(22) Date of filing: 02.09.2022
(51) Int. Cl.: E01C 19/10, B01F 25/50, B01F 27/1122, B01F 27/90, B01F 33/81, B01F 101/38, C08G 18/64, C08G 18/73, C08G 18/76, C08L 75/04

(54) **PROCESS FOR THE PREPARATION OF AN ASPHALT MIX COMPOSITION**
VERFAHREN ZUR HERSTELLUNG EINER ASPHALTMISCHUNGSZUSAMMENSETZUNG
PROCÉDÉ DE PRÉPARATION D'UNE COMPOSITION DE MÉLANGE D'ASPHALTE

(30) Priority: 03.09.2021 US 202163240423 P; 08.10.2021 EP 21201650
(43) Date of publication of application: 10.07.2024
(73) Proprietor: BASF SE, 67056 Ludwigshafen am Rhein (DE)
(72) Inventor: GEE, Samantha Au, Houston, Texas 77079 (US); ORR, Brian, Wyandotte, Michigan 48192 (US); LU, Hong, Houston, Texas 77079 (US); MALONSON, Bernie Lewis, Wyandotte, Michigan 48192 (US); LEWANDOWSKI, Paul, Freeport, Texas 77541 (US); SCHATZ, Waldemar, 49448 Lemfoerde (DE)
(74) Representative: Meissner Bolte Partnerschaft mbB
(86) International application number: PCT/EP2022/074537
(87) International publication number: WO 2023/031441

(56) References cited:
- WO-A1-2018/228840

## Description

### FIELD OF INVENTION

The present invention relates to process for preparation of asphalt mix composition.

### BACKGROUND OF THE INVENTION

Asphalt is black-tar like aggregate of materials containing asphaltenes and maltenes that finds primary use in paving and road-laying applications. Being, thermoplastic and viscoelastic, asphalt displays wide variability over temperature range, such as cracking in cold and softening in hot weather conditions.

The introduction of thermosetting reactive compounds such as isocyanates, have been introduced into asphalt in order to increase the thermal stability of asphalt.

WO 01/30911 A1 discloses an asphalt composition comprising, by weight based on the total weight of the composition, about 1 to 8 %, of a polymeric MDI, where the polymeric MDI has a functionality of at least 2.5. It also relates to a process for preparing said asphalt composition, using reaction times of below 2 hours.

WO 01/30912 A1 discloses an aqueous asphalt emulsion comprising, besides asphalt and water, an emulsifiable polyisocyanate. It also relates to an aggregate composition comprising said emulsion, and to processes for preparing said compositions.

WO 2018/228840 A1, on the other hand, discloses an improved asphalt composition showing improved physical properties in terms of being more constant over a range of temperatures, said asphalt composition being obtained by a process involving the mixing of asphalt with a thermosetting reactive compound and stirring the mixture for at least 2.5 hours.

Additional improvements in said process could be implemented via improved reactor and apparatus modification. Here, US RE39289 E, reveals apparatus and method for manufacturing asphalt.

US 8201986 B2, reveals a warm mix asphalt plant comprising a counter-flow rotating drum apparatus, with an asphalt expander with no moving parts capable of transforming existing hot mix asphalt plant to dual-mode asphalt plant.

Furthermore, US 10695769 B2, reveals apparatus and associated method for recycling at least one fraction of bitumen-containing material, involving dissolution vessel, a tumbler positioned therein, and at least one solvent distributor.

While the state of art discloses several processes for obtaining asphalt mix compositions, there is an unmet need for methods that are time and cost/energy efficient.

### SUMMARY OF THE INVENTION

Surprisingly, it has been found that the above-identified objects are met by providing a process for the preparation of as an asphalt mix composition as described hereinbelow, wherein asphalt composition and thermosetting reactive compound are homogenized in a tank fitted with a first impeller, wherein the impeller allows an axial velocity > 0.4 m/s, a radial velocity > 0.65 m/s, and a shear rate > 3.5 s-¹; and wherein homogenization of (3) is carried out at a mixing power < 3 W/kg. Said process, involving specifically selected impellers is noted to results in a dramatic reduction in mixing power, thereby leading to a major reduction in cost and energy needs, while ensuring low reaction times.

Accordingly, in one aspect, the presently claimed invention is directed to the process for the preparation of an asphalt mix composition, said process comprising: (1) heating an asphalt composition to a temperature in the range of from 110 to 190 °C to obtain a first input stream; (2) providing one or more thermosetting reactive compounds to obtain a second input stream; and (3) homogenizing the streams of (1) and (2) in at least a first tank fitted with a first impeller, wherein the impeller allows an axial velocity > 0.4 m/s, a radial velocity > 0.65 m/s, and a shear rate > 3.5 s-¹; and wherein homogenization of (3) is carried out at a mixing power < 3 W/kg.

In another aspect, the presently claimed invention is directed to asphalt mix composition obtained or obtainable according to above-mentioned process.

In yet another aspect, the presently claimed invention is directed to use of an asphalt mix composition for pavement and weatherproofing applications.

### DETAILED DESCRIPTION OF THE INVENTION

Before the present compositions and formulations of the invention are described, it is to be understood that this invention is not limited to particular compositions and formulations described, since such compositions and formulation may, of course, vary. It is also to be understood that the terminology used herein is not intended to be limiting, since the scope of the present invention will be limited only by the appended claims.

The terms "comprising", "comprises" and "comprised of" as used herein are synonymous with "including", "includes" or "containing", "contains", and are inclusive or open-ended and do not exclude additional, non-recited members, elements or method steps. It will be appreciated that the terms "comprising", "comprises" and "comprised of" as used herein comprise the terms "consisting of", "consists" and "consists of".

Furthermore, the terms "first", "second", "third" or "(a)", "(b)", "(c)", "(d)" etc. and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein. In case the terms "first", "second", "third" or "(A)", "(B)" and "(C)" or "(a)", "(b)", "(c)", "(d)", "i", "ii" etc. relate to steps of a method or use or assay there is no time or time interval coherence between the steps, that is, the steps may be carried out simultaneously or there may be time intervals of seconds, minutes, hours, days, weeks, months or even years between such steps, unless otherwise indicated in the application as set forth herein above or below.

In the following passages, different aspects of the invention are defined in more detail. Each aspect so defined may be combined with any other aspect or aspects unless clearly indicated to the contrary. In particular, any feature indicated as being preferred or advantageous may be combined with any other feature or features indicated as being preferred or advantageous.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment but may. Furthermore, the features, structures or characteristics may be combined in any suitable manner, as would be apparent to the person skilled in the art from this disclosure, in one or more embodiments. Furthermore, while some embodiments described herein include some, but not other features included in other embodiments, combinations of features of different embodiments are meant to be within the scope of the invention, and form different embodiments, as would be understood by those in the art. For example, in the appended claims, any of the claimed embodiments can be used in any combination.

Furthermore, the ranges defined throughout the specification include the end values as well, i.e. "a range of 1 to 10" or "in between 1 to 10" implies that both 1 and 10 are included in the range. Additionally, non-integrals values falling within range such as 1.1, 1.2, so on and so forth are also considered to be inclusive. For the avoidance of doubt, the applicant shall be entitled to any equivalents according to applicable law.

An aspect of the present invention is directed towards the process for the preparation of an asphalt mix composition, said process comprising: (1) heating an asphalt composition to a temperature in the range of from 110 to 190 °C to obtain a first input stream; (2) providing one or more thermosetting reactive compounds to obtain a second input stream; and (3) homogenizing the streams of (1) and (2) in at least a first tank fitted with a first impeller, wherein the impeller allows an axial velocity > 0.4 m/s, a radial velocity > 0.65 m/s, and a shear rate > 3.5 s-¹; and wherein homogenization of (3) is carried out at a mixing power < 3 W/kg.

Preferably, the impeller allows an axial velocity > 0.45 m/s, or > 0.5 m/s, or > 0.6 m/s, or more preferably, > 0.75 m/s.

Preferably, the impeller allows a radial velocity > 0.67 m/s, > 0.69 m/s, or more preferably > 0.7 m/s, or > 0.75 m/s, or > 1 m/s.

Preferably, the impeller allows a shear rate > 3.8 s-¹, or more preferably > 4.0 s⁻¹ or > 4.1 s-¹, or > 4.2 s-¹.

Preferably, homogenization of (3) is carried out at a mixing power < 2.9 W/kg, or < 3 W/kg, or more preferably < 2.5 W/kg.

According to the invention, the asphalt composition of (1) is heated to a temperature in the range of from 110 to 190 °C to obtain a first input stream. Preferably the asphalt composition of (1) is heated to a temperature in the range of from 120 to 190 °C, or of from 130 to 190 °C, or of from 150 to 190 °C, or of from 175 to 190 °C, and more preferably of from 180 to 185 °C. Suitable asphalt composition are described hereinbelow.

According to the invention, one or more thermosetting reactive compounds are provided to obtain a second input stream of (2). Suitable thermosetting reactive compounds are described hereinbelow.

Optionally, a heater or heating device is positioned such that it can heat the asphalt prior to its entry into first input stream and/or it is positioned such that the first input stream is heated. Preferably, the first input stream is heated continuously or intermittently.

According to the invention, homogenizing the streams of (1) and (2) occurs in at least a first tank fitted with a first impeller. Preferably, homogenizing the streams of (1) and (2) occurs either exclusively in first tank or in one or more additional tanks in combination with first tank. Said one or more tanks are located upstream of first tank and are in fluid communication with first tank.

In one preferred embodiment of the present invention, the homogenizing the streams of (1) and (2) occurs exclusively in first tank.

In an alternate embodiment, either the molten asphalt or the one or more thermosetting reactive compounds are already present in the first tank and only one stream for the other reactant is provisioned. In a preferred embodiment, the first tank fitted with an impeller as specified herein, contains molten asphalt and a input stream is provided for introducing one or more thermosetting reactive compounds.

In another preferred embodiment of the present invention, the homogenizing the streams of (1) and (2) occurs in one or more additional tanks in combination with first tank. More preferably, homogenizing the streams of (1) and (2) occurs in a second tank fitted with a second impeller located upstream to the first tank and in fluid communication with the first tank.

Preferably, the homogenization of (3) is carried out at a rate in the range of from 20 to 7000 rpm, or 20 to 3000 rpm, 20 to 1000 rpm, or 20 to 500 rpm, 30 to 350 rpm, or 30 to 250 rpm, or 30 to 200 rpm. More preferably, the homogenization of (3) is carried out at a rate in the range of from 40 to 100 rpm.

Preferably, the homogenization of (3) is carried out for a duration in the range of from 0.1 to 10 hours. More preferably, the homogenization of (3) is carried out for a duration in the range of from 0.5 to 9, or 1 to 8.5. Even more preferably, the homogenization of (3) is carried out for a duration in the range of from or 1.5 to 8, or 1.5 to 7.5, or 1.5 to 7, or 1.5 to 6.5 hours. Even more preferably, the homogenization of (3) is carried out for a duration in the range of from 0.1 to 6 hours.

Preferably, homogenization of (3) is conducted at a temperature in the range of from 110 to 190 °C to obtain a first input stream. Preferably the homogenization of (3) is conducted at a temperature in the range of from 120 to 190 °C, or of from 130 to 190 °C, or of from 150 to 190 °C, or of from 175 to 190 °C, and more preferably of from 180 to 185 °C.

Preferably, an output stream withdrawn from bottom of first tank is directed to a transportation tanker or truck. Optionally, a recycle stream is connected to the first or second tank, wherein the recycle stream is in fluid communication with the output stream obtained from the bottom of first tank. Recycling allows for additional mixing as the asphalt mix composition goes through the loop and allows for free mixing in the tank. Preferably, a recycle stream is fed into the first tank independent of the first and second input streams. The ratio of recycle stream rate is in the range up to 10% of input stream rate.

Preferably, a pump is positioned suitably to ensure steady flow through the plant. Preferably, said pump may be provisioned with suitable control device to ensure controller flow. Preferably, a flow controller such as a mass flow controller may be provided at suitable points to control the rate of input stream and the output stream. Herein, the pumps are set at rates as per operational requirement.

Preferably, the second tank is operated at a higher mixing power than the first tank. More preferably, the second tank is operated at 1.2 to 10 times mixing power of first tank. Even more preferably, the second tank is operated at 1.5 to 8.5, or 1.5 to 6 times, or 1.5 to 5 times, or 1.5 to 4.5 times, or 2 to 4 times mixing power of first tank.

The first tank may function as holding or mixing tank based on the mixing power applied. Preferably, the first tank functions as holding tank when the second tank is the mixing tank. Preferably, the mixing power is varied on basis of the demand.

Preferably, the second tank has higher volume, preferably 2 to 50 times the capacity of first tank. More preferably, the second tank is operated at a capacity 5 to 40, or 10 to 35, or 15 to 30 times the first tank.

The first and second input stream are homogenized in first tank and/or second tank. Preferably, the first and second input stream are simultaneously homogenized in one or more additional tanks before being introduced into the first tank. More preferably, the first and second input stream are simultaneously homogenized in the second tank before being introduced into the first tank. Alternatively, the first and second input stream are simultaneously homogenized in the first tank alone.

The first and second input stream may be fed into the first or second tank simultaneously or sequentially.

Preferably, a bypass stream is provided to directly introduce first and second stream into first tank. The ratio of bypass stream rate is in the range up to 10% of input stream rate.

Preferably, the first and/or second tank further comprise at least one baffle.

Preferably, the process is carried out as a batch or continuous process. More preferably, the process is carried out as a continuous process. A recycle stream is preferably employed when the process is carried out as a continuous process.

### Impellers

According to the invention, homogenizing the streams of (1) and (2) in at least a first tank fitted with a first impeller, wherein the impeller allows an axial velocity > 0.4 m/s, a radial velocity > 0.65 m/s, and a shear rate > 3.5 s-¹.

Preferably, the first and second impeller are selected from pitched blade turbine, flat blade turbine, chevron, ribbon, anchor, rushton turbine, or combinations thereof. More preferably, the the first and second impeller are selected from ribbon, anchor, or combination of pitched blade turbine and flat blade turbine. More preferably, the the first and second impeller is anchor.

More preferably, the second impeller is selected from pitched blade turbine, flat blade turbine, chevron, ribbon, anchor, rushton turbine, rotor stator, or combinations thereof. Even more preferably, the second impeller is a rotor stator.

Preferably, the first and/or second impeller comprise at least one axial flow blade and at least one radial flow blade. More preferably, the first and/or second impeller is a combination of pitched blade turbine and flat blade turbine.

### Asphalt composition

According to the invention the asphalt composition employed in the process can be any asphalt known and generally covers any bituminous compound. It can be any of the materials referred to as bitumen or asphalt, for example, distillate, blown, high vacuum, and cut-back bitumen, and also for example asphalt concrete, cast asphalt, asphalt mastic, natural asphalt or mixtures thereof. For example, a directly distilled asphalt may be used, having, for example, a penetration of 80/100 or 180/200. In another embodiment, the asphalt can be free of fly ash.

The different physical properties of the asphalt are measured by different tests known in the art and described in detail in the experimental section. For instance, elastic response and non-recoverable creep compliance (Jnr) are computed in in the Multiple Stress Creep Recovery (MSCR) test in which the asphalt is subjected to a constant load for a fixed time. The total deformation for a specific period of time is given in % and correspond to a measure of the elasticity of the binder. In addition, the phase angle may be measured which illustrates the improved elastic response (reduced phase angles) of the modified binder.

A Bending Beam Rheometer (BBR) is used to determine the stiffness of asphalt at low temperatures and usually refer to flexural stiffness of the asphalt. Two parameters are determined in this test: the creep stiffness is a measure of the resistance of the bitumen to constant loading, and the creep rate (or m value) is a measure of how the asphalt stiffness changes as loads are applied. If the creep stiffness is too high, the asphalt will behave in a brittle manner, and cracking will be more likely. A high m-value is desirable, as the temperature changes and thermal stresses accumulate, the stiffness will change relatively quickly. A high m-value indicates that the asphalt will tend to disperse stresses that would otherwise accumulate to a level where low temperature cracking could occur. Various properties of the asphalt can be determined using standard techniques known to a person skilled in the art. For instance, softening point according to DIN EN1427, rolling Thin Film Oven (RTFO) Test can be determined according to DIN EN 12607-1, dynamic Shear Rheometer (DSR) according to DIN EN 14770 - ASTM D7175, multiple Stress Creep Recovery (MSCR) Test according to DIN EN 16659 - ASTM D7405, and bending beam rheometer according to DIN EN 14771 - ASTM D6648.

Preferably, the asphalt preferably has a penetration selected from 20-30, 30-45, 35-50, 40-60, 50-70, 70-100, 100-150, 160-220, 250-330,or 300-400, and/or a performance grade selected from 52-16, 52-22, 52-28, 52-34, 52-40, 58-16, 58-22, 58-28, 58-34, 58-40, 64-16, 64-22, 64-28, 64-34, 64-40, 67-22, 70-16, 70-22, 70-28, 70-34, 70-40, 76-16, 76-22, 76-28, 76-34 or 76-40. More Preferably, the penetration is selected from 70-100, 100-150, 160-220, 250-330, or 300-400, and/or the performance grade is selected from 52-16, 52-22, 52-28, 52-34, 52-40, 58-16, 58-22, 58-28, 58-34, 58-40, 64-16, 64-22, 64-28, 64-34, 67-22, 70-16, 70-22, 70-28, 76-16, 76-22, 76-28, 76-34, or 76-40. Even more preferably, the penetration is selected from 100-150, 160-220, 250-330, or 300-400, and/or the performance grade is selected from 52-16, 52-22, 52-28, 52-34, 52-40, 58-16, 58-22, 58-28, 58-34, 64-16, 64-22, 64-28, 67-22, 70-16, 70-22, 76-16, or 76-22. Even more preferably, the penetration is selected from 100-150, 160-220, 250-330, or 300-400, and/or the performance grade is selected from 58-28, 58-34, 64-16, 64-22, 64-28, 67-22, 70-16, 70-22, 76-16, or 76-22. Most preferably, the asphalt has the performance grade selected from 70-16, 70-22, 64-16, 67-22, or 64-22. AASHTO - M320 describes the standard specification for performance graded asphalts, while AASHTO - M20 describes the penetration grade.

Generally, asphalt from different suppliers differ in terms of their composition depending on which reservoir the crude oil is from, as well as the distillation process at the refineries. However, the cumulated total amount of reactive group is preferably in the range of from 3.1 to 4.5 mg KOH/g. For example, the asphalt having a penetration index of 50-70 or 70-100 results in a stoichiometric amount for pMDI to be 0.8 wt.% to 1.2 wt.%. A further excess of isocyanate will be used to react with the newly formed functionalities due to oxidation sensitivity of the asphalt under elevated temperatures during the preparation of the asphalt composition.

### Thermosetting reactive compound

According to the invention, one or more thermosetting reactive compounds are provided to obtain a second input stream of (2).

Preferably, the thermosetting reactive compounds comprise one or more compounds selected from isocyanates, epoxy resins, melamine formaldehyde resins, or mixtures of two or more thereof.

Preferably, the total amount of thermosetting reactive compounds in the composition is 0.1 to 10.0 wt.-% based on the total weight of the composition.

Generally, by modifying the asphalt using the thermosetting reactive compounds, the performance in terms of different physical properties may be improved for example an increased elastic response can be achieved.

Without being bound by theory, it is believed that the thermosetting reactive compounds react chemically with different molecular species in the asphalt composition to generate a specific morphology of colloid structures. In the so obtained asphalt mix composition, the physical properties of the asphalt remain more constant over a broad range of temperatures and/or even improve over the temperature range the asphalt mix composition is subjected to.

Preferably, the thermosetting reactive compound is an isocyanate. In general, the isocyanate(s) can be present in monomeric form, in polymeric form, or as mixture of monomeric and polymeric forms. The term "polymeric" refers to the polymeric grade of the aliphatic, aromatic isocyanate, or mixtures thereof comprising dimers, trimers, higher homologues and/or oligomers.

Preferably the isocyanates amount to 1 to 100 weight % of the thermosetting reactive compounds present in the inventive asphalt mix composition. More preferably isocyanates amount to 10 to 100 weight % of the thermosetting reactive compounds present in the asphalt mix composition. Even more preferably, isocyanates amount to 30 to 100 weight % of the thermosetting reactive compounds present in the asphalt mix composition.

Preferably the isocyanate(s) have a functionality of at least 2.0, or at least 2.3, or at least 2.5, or at least 2.7. More preferably, the isocyanate(s) has a functionality in the range from 2.3 to 4.5, or 2.5 to 4.3, or 2.5 to 4.0.

Preferably the isocyanate(s) are selected from modified and/or unmodified isocyanates.

The unmodified isocyanates are preferably selected from aromatic and/or aliphatic unmodified isocyanates.

Preferably the isocyanate is a modified or unmodified aromatic isocyanate. Aromatic isocyanates include those in which two or more of the isocyanate groups are attached directly and/or indirectly to the aromatic ring. Aromatic isocyantes can be monomeric, polymeric or mixture of monomeric and polymeric forms.

Preferable unmodified aromatic isocyanates are methylene diphenyl diisocyanate (MDI), polymeric MDI, toluene diisocyanate, polymeric toluene diisocyanate, m-phenylene diisocyanate; 1,5-naphthalene diisocyanate; 1,3-phenylene diisocyanate; 2,4,6-toluylene triisocyanate, 1,3-diisopropylphenylene-2,4-diisocyanate; 1-methyl-3,5-diethylphenylene-2,4-diisocyanate; 1,3,5-triethylphenylene-2,4-diisocyanate; 1,3,5-triisoproply-phenylene-2,4-diisocyanate; 3,3'-diethyl-bisphenyl-4,4'-diisocyanate; 3,5,3',5'-tetraethyl-diphenylmethane-4,4'-diisocyanate; 3,5,3',5'-tetraisopropyldiphenylmethane-4,4'-diisocyanate; 1-ethyl-4-ethoxy-phenyl-2,5-diisocyanate; 1,3,5-triethyl benzene-2,4,6-triisocyanate; 1-ethyl-3,5-diisopropyl ben-zene-2,4,6-triisocyanate, tolidine diisocyanate, and 1,3,5-triisopropyl benzene-2,4,6-triisocyanate, or combinations of two or more of the aforementioned. In one embodiment, a monomeric mixture (including isomers thereof) and/or polymeric grades of the abovementioned aromatic isocyanates can also be used as thermosetting reactive compounds.

More preferable unmodified aromatic isocyanates are methylene diphenyl diisocyanate (MDI), polymeric MDI, toluene diisocyanate, polymeric toluene diisocyanate, m-phenylene diisocyanate; 1,5-naphthalene diisocyanate; 1,3-phenylene diisocyanate; 2,4,6-toluylene triisocyanate, 1,3-diisopropylphenylene-2,4-diisocyanate; 1-methyl-3,5-diethylphenylene-2,4-diisocyanate; 1,3,5-triethylphenylene-2,4-diisocyanate; 1,3,5-triisoproply-phenylene-2,4-diisocyanate; 3,3'-diethyl-bisphenyl-4,4'-diisocyanate; and 3,5,3',5'-tetraethyldiphenylmethane-4,4'-diisocyanate, or combinations of two or more of the aforementioned.

Even more preferable unmodified aromatic isocyanates are methylene diphenyl diisocyanate (monomeric MDI), polymeric MDI, toluene diisocyanate, polymeric toluene diisocyanate, m-phenylene diisocyanate; 1,5-naphthalene diisocyanate; 1,3-phenylene diisocyanate; and 2,4,6-toluylene triisocyanate, or combinations of two or more of the aforementioned.

Still more preferable unmodified aromatic isocyanates are monomeric MDI, polymeric MDI, toluene diisocyanate, polymeric toluene diisocyanate, and 1,5-naphthalene diisocyanate, or combinations of two or more of the aforementioned.

Even more preferable unmodified aromatic isocyanates are monomeric MDI and/or polymeric MDI. Monomeric MDI can preferably be selected from 4,4'-MDI, 2,2'-MDI and 2,4'-MDI, or combinations of two or more of the aforementioned.

In an preferred embodiment, the unmodified aromatic isocyanate(s) is polymeric MDI. Preferably, polymeric MDIs may comprise of varying amounts of isomers, for example 4,4'-, 2,2'- and 2,4'-MDI. The amount of 4,4'MDI isomers is from 26 wt.% to 98 wt.%, or from 30 wt.% to 95 wt.%, or from 35 wt.% to 92 wt.%, with respect to the isomers. More preferably, the 2 rings content of the polymeric MDI is from 20% to 62%, or from 26 % to 48%, or from 26% to 42%, with respect to the isomers.

Generally, the purity of the polymeric MDI or pMDI is not limited to any value. Preferably, the pMDI used according to the invention has an iron content of from 1 to 100 ppm, or 1 to 70 ppm, or 1 to 80 ppm, or 1 to 60 ppm, based on the total amount of the polymeric MDI.

In a preferred embodiment, the pMDI used according to the invention has a NCO content in the range of from 22 to 40 wt.%, or 25 to 37 wt.%, or 28 to 35 wt.%, or 30 to 33 wt.%, based on total weight of pMDI.

In another preferred embodiment, the pMDI is present of from 0.1 to 10 wt.%, or 0.1 wt.% to 9.5 wt.%, or 0.1 wt.% to 9.0 wt.%, or 0.1 wt.% to 8.5 wt.%, or 0.1 wt.% to 8.0 wt.%, or 0.1 wt.% to 7.5 wt.%, or 0.1 wt.% to 7.0 wt.%, based on the total weight of the asphalt mix composition.

Preferably, the pMDI has a functionality of at least 2.3, or at least 2.5, or at least 2.7. More preferably, the pMDI has a functionality in the range from 2.3 to 4.5, or 2.5 to 4.3, or 2.5 to 4.0.

Preferably the isocyanate is a modified or unmodified aliphatic isocyanate. Aliphatic isocyanates can be monomeric, polymeric or mixtures of monomeric and polymeric forms.

Preferable unmodified aliphatic isocyanates are cyclobutane-1,3-diisocyanate, 1,2-, 1,3- or 1,4-cyclohexane diisocyanate, 2,4- or 2,6 methylcyclohexane diisocyanate, 4,4'- or 2,4'-dicyclohexyldiisocyanate, 1,3,5-cyclohexane triisocyanate, isocyanatomethylcyclohexane isocyanate, isocyanatoethylcyclohexane isocyanate, bis(isocyanatomethyl)cyclohexane diisocyanate, 4,4'- or 2,4'-bis(isocyanato-methyl) dicyclohexane, isophorone diisocyanate (IPDI), diisocyanatodicyclo-hexylmethane (H12MDI), tetramethylene 1,4-diisocyanate, pentamethylene 1,5-diisocyanate, hexamethylene 1,6-diisocyanate (HDI), decamethylene diisocyanate, 1,12-dodecane diisocyanate, 2,2,4-trimethyl-hexamethylene diisocyanate, 2,4,4-trimethyl-hexamethylene diisocyanate, 2-methyl-1,5-pentamethylene diisocyanate, or combinations of two or more of the aforementioned.

More preferable unmodified aliphatic isocyanates are 2,4- or 2,6 methylcyclohexane diisocyanate, 4,4'- or 2,4'-dicyclohexyldiisocyanate, 1,3,5-cyclohexane triisocyanate, isocyanatomethylcyclohexane isocyanate, isocyanatoethylcyclohexane isocyanate, bis(isocyanatomethyl)cyclohexane diisocyanate, 4,4'- or 2,4'-bis(isocyanato-methyl) dicyclohexane, isophorone diisocyanate (IPDI), diisocyanatodicyclo-hexylmethane (H12MDI), tetramethylene 1,4-diisocyanate, pentamethylene 1,5-diisocyanate, hexamethylene 1,6-diisocyanate (HDI), decamethylene diisocyanate, 1,12-dodecane diisocyanate, 2,2,4-trimethyl-hexamethylene diisocyanate, or a combination of two or more of the aforementioned.

Even more preferable unmodified aliphatic isocyanates are 4,4'- or 2,4'-bis(isocyanatomethyl) dicyclohexane, isophorone diisocyanate (IPDI), diisocyanatodicyclo-hexylmethane (H12MDI), tetramethylene 1,4-diisocyanate, pentamethylene 1,5-diisocyanate, hexamethylene 1,6-diisocyanate (HDI), decamethylene diisocyanate, 1,12-dodecane diisocyanate, and 2,2,4-trimethyl-hexamethylene diisocyanate. Even more preferably, the aliphatic isocyanate is selected from isophorone diisocyanate (IPDI), diisocyanatodicyclo-hexylmethane (H12MDI), hexamethylene 1,6-diisocyanate (HDI), or combinations of two or more of the aforementioned.

In a preferred embodiment, at least one thermosetting reactive compound is an unmodified isocyanate, wherein the total amount of isocyanates amounts to 1 to 100 wt%, or 10 to 99 wt.%, or 30 to 99 wt.%, of the thermosetting reactive compounds present in the asphalt mix composition.

In another preferred embodiment at least one thermosetting reactive compound is an unmodified aromatic or aliphatic isocyanate, wherein the total amount of isocyanates amounts to 1 to 100 wt%, or 10 to 99 wt.%, or 30 to 99 wt.%, of the thermosetting reactive compounds present in the asphalt mix composition.

Modified isocyanates, particularly modified monomeric MDIs can be selected from prepolymers, uretonimine and carbodiimide modified as suitable thermosetting reactive compounds.

The modified isocyanates are preferably selected from aromatic and/or aliphatic modified isocyanates.

Preferable modified aromatic isocyanates are carbodiimide modified monomeric MDI, uretonimine modified monomeric MDI, or combinations thereof.

More preferable aromatic isocyanate(s) is carbodiimide modified monomeric MDI.

In a preferred embodiment, the carbodiimide modified monomeric MDI comprises of 65 wt.% to 85 wt.% of 4,4'-MDI and 15 wt.% to 35 wt.% of carbodiimide, said wt.% based on the total weight of the carbodiimide modified monomeric MDI.

In another preferred embodiment, the amount of 4,4'-MDI in the carbodiimide modified monomeric MDI is in the range of from 70 wt.% to 80 wt.% and the amount of carbodiimide is in the range of from 20 wt.% to 30 wt.%.

In another preferred embodiment, the polymeric MDI or pMDI may also comprise modified variants containing carbodiimide, uretonimine, isocyanurate, urethane, allophanate, urea or biuret groups. This all will be referred to in the following as pMDI.

In yet another preferred embodiment, the monomeric MDI has a functionality of at least 2.0, or at least 2.1, or at least 2.15, for example 2.2, 2.3 or 2.4. More preferably, the monomeric MDI has a functionality in the range from 2.3 to 4.5, or 2.5 to 4.3, or 2.5 to 4.0. This all will be referred to in the following as monomeric MDI.

Preferably the isocyanate is a modified aliphatic isocyanate. Modified aliphatic isocyanates are known in the art. Depending on the application, they may be obtainable by well-known methods involving reacting one or more of the above mentioned unmodified aliphatic isocyanate(s) with suitable reactive group(s).

More preferred modified aliphatic isocyanate is a biuret-modified HDI.

In a preferred embodiment, at least one thermosetting reactive compound is a modified isocyanate, wherein the total amount of isocyanates amounts to 1 to 100 wt%, or 10 to 99 wt.%, or 30 to 99 wt.%, of the thermosetting reactive compounds present in the asphalt mix composition.

In another preferred embodiment at least one thermosetting reactive compound is a modified aromatic or aliphatic isocyanate, wherein the total amount of isocyanates amounts to 1 to 100 wt%, or 10 to 99 wt.%, or 30 to 99 wt.%, of the thermosetting reactive compounds present in the asphalt mix composition

As mentioned above, the thermosetting reactive compounds are majorly isocyanates. However, it is also possible that optionally thermosetting reactive compounds different from isocyanates are also present in the asphalt mix composition. Preferably the thermosetting reactive compounds are selected from epoxy resin and/or melamine formaldehyde resin. In such a case, the minimum total amount of isocyanates in the thermosetting reactive compounds is at least 1 wt.%, or 10 wt.%, or 20 wt.%, or 30 wt.% or 40 wt.% or 50 wt.% or 60 wt.% or 70 wt.%, or 80 wt.%, or 85 wt.%, or 88 wt.%, or 90 wt.%, 92 wt.% or 94 wt.% or 96 wt%, or 98 wt.%, 99 wt.%, based on the total weight of the thermosetting reactive compounds present in the asphalt mix composition. In such cases, the maximum total amount of isocyanates in the thermosetting reactive compounds is at most 99.9 wt.%, or 98 wt.%, or 97 wt.%, or 95 wt.% or 92 wt.% or 90 wt.% or 85 wt.% or 80 wt.%, or 70, based on the total weight of the thermosetting reactive compounds present in the asphalt mix composition. Preferably, the total amount of isocyantates in the thermosetting reactive compounds ranges of from 1 to 99.9 wt.%, or 10 to 99 wt.%, or 30 to 99 wt.%, based on the total weight of the thermosetting reactive compounds present in the asphalt mix composition.

Suitable epoxy resins are known in the art and the chemical nature of epoxy resins used according to the present invention is not particularly limited. In a preferred embodiment, the epoxy resins are one or more aromatic epoxy resins and/or cycloaliphatic epoxy resins selected from bisphenol A bisglycidyl ether (DGEBA), bisphenol F bisglycidyl ether, ring-hydrogenated bisphenol A bisglycidyl ether, ring-hydrogenated bisphenol F bisglycidyl ether, bisphenol S bis- glycidyl ether (DGEBS), tetraglycidylmethylenedianiline (TGMDA), epoxy novolaks (the reaction products from epichlorohydrin and phenolic resins (novolak)), cycloaliphatic epoxy resins, such as 3,4-epoxycyclohexylmethyl 3,4-epoxycyclohexanecarboxylate and diglycidyl hexahydrophthalate. Preferably, the epoxy resins can be selected from bisphenol A bisglycidyl ether and / or bisphenol F bisglycidyl ether and mixtures of these two epoxy resins.

Suitable melamine formaldehyde resins are known in the art and are mainly the condensation products of melamine and formaldehyde. Depending on the desired application, they can be modified, for example by reaction with polyvalent alcohols. The chemical nature of melamine formaldehyde resins used according to the invention is not particularly limited. In a preferred embodiment, the melamine formaldehyde resins relate to an aqueous melamine resin mixture with a resin content in the range of from 50 wt.% to 70 wt.%, based on the aqueous melamine resin mixture, with melamine and formaldehyde present in the resin in a molar ratio range of from 1:3 to 1:1, or 1:1.3 to 1:2.0, or 1:1.5 to 1:1.7.

The melamine formaldehyde resin may contain polyvalent alcohols, for example C₂ to C₁₂ diols, in an amount of from 1.0 wt.% to 10.0 wt.%, or 3.0 wt.% to 6.0 wt.%. Suitable C₂ to C₁₂ diols can be selected from diethylene glycol, propylene glycol, butylene glycol, pentane diol and / or hexane diol.

As further additives, the melamine formaldehyde resins may contain 0 wt.% to 8.0 wt.% of caprolactam and 0.5 wt.% to 10 wt.% of 2-(2-phenoxyethoxy)-ethanol and/or polyethylene glycol with an average molecular mass of 200 g/mol to 1500 g/mol, each based on the aqueous melamine resin mixture.

Preferably, the thermosetting reactive compound is present in an amount of from 0.1 to 10.0 wt.% based on the total weight of the asphalt mix composition. The presence of thermosetting reactive compounds in a total amount of 0.1 to 10.0 wt.-% based on the total weight of the composition, wherein at least one thermosetting reactive compound being an isocyanate surprisingly ensures the adherence of the asphalt mix composition with the standards for roofing application as outlined in ASTM D312.

More preferably, the thermosetting reactive compound is present of from 0.1 wt.% to 9.5 wt.%, or 0.1 wt.% to 9.0 wt.%, or 0.1 wt.% to 8.5 wt.%, or 0.1 wt.% to 8.0 wt.%, or 0.1 wt. % to 7.5 wt.%, or 0.1 wt.% to 7.0 wt.%. In another embodiment, the thermosetting reactive compound is present of from 0.1 wt.% to 6.5 wt.%, 0.1 wt.% to 6.0 wt.%, or 0.1 wt.% to 5.0 wt.%, or 0.1 wt.% to 5.5 wt.%, or 0.1 wt.% to 4.5 wt.%, or 0.1 wt.% to 4.0 wt.%, or 0.1 wt.% to 3.5 wt.%. In a still another embodiment, it is present of from 0.1 wt.% to 3.0 wt.%, or 0.5 wt.% to 5.0 wt.%, or 0.5 wt.% to 3.0 wt.%, or 1.0 wt.% to 5.0 wt.%, or 1.0 wt.% to 4.5 wt.%, or 1.0 wt.% to 4.0 wt.%, or 1.5 wt.% to 4.0 wt.%, or 1.0 wt.% to 3.0 wt.%.

In a preferred embodiment, the asphalt composition of (1) may further comprise a polymer. Suitable polymers according to the invention are selected from styrene / butadiene / styrene copolymer (SBS), styrene butadiene rubber (SBR), neoprene, polyethylene, low density polyethylene, oxidized high density polyethylene, polypropylene, oxidized high density polypropylene, maleated polypropylene, ethylene-butyl-acrylate-glycidyl-methacrylate terpolymer, ethyl vinyl acetate (EVA) and polyphosphoric acid (PPA).

Styrene / butadiene / styrene copolymers (SBS) are known in the art. SBS is a thermoplastic elastomer made with two monomers, which are styrene and butadiene. Therefore, SBS shows the properties of plastic and rubber at the same time. Due to these properties, it is widely used in a variety of areas including the use as asphalt modifying agent and adhesives. SBS-copolymers are based on block copolymers having a rubber centre block and two polystyrene end blocks also named as triblock copolymer A-B-A. SBS elastomers combine the properties of a thermoplastic resin with those of butadiene rubber. The hard, glassy styrene blocks provide mechanical strength and improve the abrasion resistance, while the rubber mid-block provides flexibility and toughness. SBS rubbers are often blended with other polymers to enhance their performance. Often oil and fillers are added to lower cost or to further modify the properties. Various properties of these thermoplastics can be obtained by selecting A and B from a range of molecular weights.

Any of known SBS-copolymers can be used, provided it is compatible with the asphalt composition of (1). Suitable SBS-copolymers are not limited in their structure, they can be branched or linear. Suitable SBS-copolymers are not particularly limited in their styrene content. In one embodiment, the styrene/butadiene/styrene (SBS) copolymers have a styrene content of from 10 wt.% to 50 wt.% based on the total weight of the polymer, or of from 15 wt.% to 45 wt.%, or 20 wt.% to 42 wt.%, or 22 wt.%, or 23 wt.%, or 26 wt.%, or 28 wt.%, or 30 wt.%, or 32 wt.%, or 34 wt.%, or 36 wt.%, or 38 wt.%, or 39 wt.% based on the total weight of the polymer. The term "styrene content" refers to the amount of styrene polymerized into the SBS polymer.

Preferably, the weight average molecular weight (Mw) of the SBS-copolymers is in the range of from 10,000 g/mol to 1,000,000 g/mol, or 30,000 g/mol to 300,000 g/mol, or 70,000 g/mol to 300,000 g/mol, or 75,000 g/mol to 210,000 g/mol, as determined by gel permeation chromatography (GPC).

Suitable styrene-butadiene or styrene-butadiene rubber (SBR) are known in the art and described as families of synthetic rubbers derived from styrene and butadiene. The styrene/butadiene ratio influences the properties of the polymer: with high styrene content, the rubbers are harder and less rubbery. Generally, any of known SBR-copolymers can be used, provided it is compatible with the asphalt composition of (1). Suitable SBR-copolymers are not limited in their structure, they can be branched or linear. Suitable SBR-copolymers are not particularly limited in their styrene content. In one embodiment, the SBR copolymers have a styrene content of from 10 wt.% to 50 wt.% based on the total weight of the polymer, or 15 wt.% to 45 wt.%, or 20 wt.% to 42 wt.%, or 22 wt.%, or 23 wt.%, or 26 wt.%, or 28 wt.%, or 30 wt.%, or 32 wt.%, or 34 wt.%, or 36 wt.%, or 38 wt.%, or 39 wt.% based on the total weight of the polymer.

Preferably, the weight average molecular weight (Mw) of the SBR-copolymers is in the range of from 10,000 g/mol to 500,000 g/mol, or 50,000 g/mol to 250,000 g/mol, or 70,000 g/mol to 150,000 g/mol, or 75,000 g/mol to 135,000 g/mol, as determined by gel permeation chromatography (GPC).

Generally, neoprene is known in the art and is the generic name for polymers synthesized from chloroprene. It is often supplied in latex form. It may be a colloidal dispersion of chloroprene polymers prepared by emulsion polymerization. The neoprene structure is extremely regular although its tendency to crystallize can be controlled by altering the polymerization temperature. The final polymer is comprised of a linear sequence of trans-3-chloro-2-butylene units which are derived from the trans 1,4 addition polymerization of chloroprene.

While any of the known neoprene can be used, provided it is compatible with the asphalt. In one embodiment, a neoprene latex is used. Suitable neoprene latex has a solid content of from 30 wt.% to 60 wt.% based on the total weight of the latex, or of from 30 wt.% to 60 wt.%, or of from 30 wt.% to 60 wt.%.

Suitable polyethylene and polypropylene homopolymers or copolymers as well as modified polyethylene and polypropylene polymers, for example low density polyethylene, oxidized high density polypropylene, maleated polypropylene are known in the art and described as families of polymers/copolymers based on the respective monomers. The molecular weight and the degree of crystallinity greatly influences the properties of these polymers. Polyethylene and polypropylene homopolymers or copolymers as well as modified polyethylene and polypropylene polymers with high levels of structuring show high tensile strengths but little ability to deform before failure. Less structuring results in an increased ability of the material to flow. For example, polyethylenes, as is typical of paraffinic materials, are also relatively unreactive with most solvents. In addition to the molecular weight and the degree of crystallinity also the density has a large influence on the properties of the respective polymer since the lower densities represent less molecular packing, and hence less structuring. Low and high density polyethylenes are generally defined as those having a specific gravity of about 0.915 to 0.94 and approximately 0.96, respectively, determined according to ASTM D792. Also, modifiers incorporated as copolymers are used to disrupt the crystalline nature of the unmodified polymers for example polyethylene and this results in a more elastic, amorphous additive. The function of these polymers within the asphalt mix composition is not to form a network but to provide plastic inclusions within the matrix. At cold temperatures, these inclusions are intended to directly improve the binder's resistance to thermal cracking by inhibiting the propagation of cracks. At warm temperatures, the particle inclusions should increase the viscosity of the binder and therefore the mixture' s resistance to rutting.

Any of known polyethylene and polypropylene homopolymers or copolymers as well as modified polyethylene and polypropylene polymers can be used in the asphalt mix composition, provided it is compatible with the asphalt composition of (1). Suitable polymers like polyethylene, low density polyethylene, oxidized high density polyethylene, polypropylene, oxidized high density polypropylene, maleated polypropylene, are not particularly limited in their molecular weight. Preferably, each of the polyethylene, low density polyethylene, oxidized high density polyethylene, polypropylene, oxidized high density polypropylene, maleated polypropylene, has a weight average molecular weight (Mw) ranging of from 800 g/mol to 50,000 g/mol, or 1000 g/mol to 45,000 g/mol, or 2000 g/mol to 42,000 g/mol, or 1,000 g/mol to 5,000 g/mol, or 5,000 g/mol to about 10,000 g/mol, or 10,000 g/mol to 20,000g/mol, or 20,000 g/mol to 30,000 g/mol, or 30,000 g/mol to 40,000 g/mol, or 40,000 g/mol to about 50,000 g/mol, as determined by gel permeation chromatography (GPC). Such polymers may be used as plastomers in the asphalt mix composition.

Furthermore, suitable polymers like polyethylene, low density polyethylene, oxidized high density polyethylene, polypropylene, oxidized high density polypropylene, maleated polypropylene are not particularly limited in their crystallinity. In an embodiment, each of the polyethylene, low density polyethylene, oxidized high density polyethylene, polypropylene, oxidized high density polypropylene, maleated polypropylene has a crystallinity of greater than 50%, based on the total weight of the polymer being described, or in the range of from 52% to 99%, or 55% to 90%. The crystallinity of the aforesaid polymers is determined by Differential Scanning calorimetry (DSC), which is a technique generally known in the art.

Also, complex polyethylene copolymers are known in the art as for example ethylene-butyl-acrylate-glycidyl-methacrylate terpolymer based on three different monomers. This family of copolymers is known as plasticizer resins which are improving flexibility and toughness. For example, these copolymers are commercially available from DuPont, under the name Elvaloy^{®} terpolymers.

Any of known ethylene-butyl-acrylate-glycidyl-methacrylate terpolymer can be used in the asphalt mix composition, provided it is compatible with the asphalt composition of (1). Suitable polymers like ethylene-butyl-acrylate-glycidyl-methacrylate terpolymer are not particularly limited in their molecular weight. Preferably, the ethylene-butyl-acrylate-glycidyl-methacrylate terpolymer has a weight average molecular weight (Mw) of from 800 g/mol to 150,000 g/mol, or 1500 g/mol to 120,000 g/mol, or 5000 g/mol to 90,000 g/mol, as determined by gel permeation chromatography (GPC).

Suitable ethylene and vinyl acetate copolymers (EVA) are known in the art and described as families of copolymers based on the respective monomers. The inclusion of the vinyl acetate is used to decrease the crystallinity of the ethylene structure and to help make the plastomers more compatible with the asphalt composition of (1). Copolymers with 30 percent vinyl acetate are classified as flexible, resins that are soluble in toluene and benzene. When the vinyl acetate percentage is increased to 45 percent, the resulting product is rubbery and may be vulcanized.

While any of the known EVA-copolymers can be used, provided it is compatible with the asphalt composition of (1). Suitable EVA-copolymers are not limited in their structure, they can be branched or linear, preferably the EVA-copolymers are linear. Suitable EVA-copolymers are not particularly limited in their vinyl acetate content. Preferably, the EVA copolymers have a vinyl acetate content of from 20 wt.% to 60 wt.% based on the total weight of the polymer, or 25 wt.% to 50 wt.%, or 30 wt.% to 45 wt.%.

Generally, polyphosphoric acid (PPA) is known in the art and is a polymer of orthophosphoric acid (H₃PO₄) of the general formula (Hₙ₊₂PₙO₃ₙ₊₁). Polyphosphoric acid is a mixture of orthophosphoric acid with pyrophosphoric acid, triphosphoric and higher acids and is often characterized on the basis of its calculated content of H₃PO₄. Superphosphoric acid is a similar mixture differentiating in the content of H₃PO₄ and can be subsumed under the definition of PPA in the context of this invention. Generally, any of the known Polyphosphoric acids can be used, provided it is compatible with the asphalt. Suitable Polyphosphoric acids according to the invention are not limited in their structure and composition of orthophosphoric acid with pyrophosphoric acid, triphosphoric and higher acids, preferably the PPA is water-free. In one embodiment, the polyphosphoric acid (PPA) has a calculated H₃PO₄ content of from 100% to 120%, or 103% to 118%, or 104% to 117%.

The polyphosphoric acid may be used as an additional additive of the asphalt composition of (1), in conventional amount, for example to raise the product's softening point. The phosphoric acid may be provided in any suitable form, including a mixture of different forms of phosphoric acid. For example, some suitable different forms of phosphoric acid include phosphoric acid, polyphosphoric acid, super phosphoric acid, pyrophosphoric acid and triphosphoric acid.

Preferably, the stream of (1) further comprises a granular material.

More preferably, granular material comprises one or more granular materials selected from gravel, reclaimed asphalt pavement, sand, one or more filler materials, or mixtures of two or more thereof.

Preferably, the granular material is pre-heated in the range of from 110 to 240 °C before being introduced into first input stream (1).

Preferably, the weight ratio of the asphalt mix composition obtained in (3) to the granular material is in the range of from 0.5 : 99.5 to 25 : 75.

Further optional additives known in the art may be added to the asphalt composition of (1) according to the invention in order to adapt the properties of the asphalt mix composition depending on the respective application. Additives may be for example waxes. These waxes if used as an additional additive in the asphalt binder composition may be functionalized or synthetic waxes, or naturally occurring waxes. Furthermore, the wax may be oxidized or non-oxidized. Non-exclusive examples of synthetic waxes included ethylene bis-stearamide was (EBS), Fischer-Tropsch wax (FT), oxidized Fischer-Tropsch wax (FTO), polyolefin waxes such as polyethylene wax (PE), oxidized polyethylene wax (OxPE), polypropylene wax, polypropylene/polyethylene wax alcohol wax, silicone wax, petroleum waxes such as microcrystalline wax or paraffin, and other synthetic waxes. Non-exclusive examples of functionalized waxes include amine waxes, amide waxes, ester waxes, carboxylic acid waxes, and microcrystalline waxes. Naturally occurring waxes may be derived from a plant, from an animal, or from a mineral, or from other sources. Non-exclusive examples of natural waxes include plant waxes such as candelilla wax, carnauba wax, rice wax, Japan wax and jojoba oil; animal waxes such as beeswax, lanolin and whale wax; and mineral waxes such as montan wax, ozokerit and ceresin. Mixtures of the aforesaid waxes are also suitable, such as, for example, the wax may include a blend of a Fischer-Tropsch (FT) wax and a polyethylene wax.

Plasticizers may also be used as additional additives, in conventional amounts, to increase the plasticity or fluidity of the asphalt mix composition. Suitable plasticizers include hydrocarbon oils (e.g. paraffin, aromatic and naphthenic oils), long chain carbon diesters (e.g. phthalic acid esters, such as dioctyl phthalate, and adipic acid esters, such as dioctyl adipate), sebacic acid esters, glycol, fatty acid, phosphoric and stearic esters, epoxy plasticizers (e.g. epoxidized soybean oil), polyether and polyester plasticizers, alkyl monoesters (e.g. butyl oleate), long chain partial ether esters (e.g. butyl cellosolve oleate) among other plasticizers.

Antioxidants may be used in conventional amounts as additional additives for the asphalt binder compositions to prevent the oxidative degradation of polymers that causes a loss of strength and flexibility in these materials.

Conventional amounts with regard to the optional additives are in the range of from 0.1 wt.% to 5.0 wt.% based on the total amount of the asphalt composition of (1).

Various parameters are important to identify suitability towards specific applications such as weatherproofing application. The properties of the asphalt mix composition such as an increased useful temperature interval, an increased elastic response, a good adhesion and an increased load rating as well as a reduced potential for permanent asphalt deformations, may depend on the particle concentration with a specific sedimentation coefficient, which is directly correlated to the particle size, of the corresponding composition. According to the invention, the asphalt mix composition has at least 18% by weight based on the total weight of the composition particles with a sedimentation coefficient above 5000 Sved in a white spirit solvent.

Preferably, the asphalt mix composition has at least 20% by weight, or at least 23% by weight based on the total weight of the composition particles with a sedimentation coefficient above 5000 Sved in a white spirit solvent. These particles with a sedimentation coefficient above 5000 Sved in a white spirit solvent can be up to 99.9 % by weight based on the total weight of the composition, or less than 95 % by weight, or less than 90 % by weight, or less than 80 % by weight based on the total weight of the composition. For example, 18% to 75% by weight based on the total weight of the composition particles with a sedimentation coefficient in the range of from 15000 to 170000 Sved in a white spirit solvent, or 23% to 65% by weight based on the total weight of the composition particles with a sedimentation coefficient in the range of from 25000 to 140000 Sved in a white spirit solvent, or 30% to 52% by weight based on the total weight of the composition particles with a sedimentation coefficient in the range of from 22000 to 95000 Sved in a white spirit solvent.

In the present context, white spirit solvent refers to white spirit high-boiling petroleum with the CAS-Nr.:64742-82-1, having 18% aromatics basis and a boiling point of from 180°C to 220°C. The sedimentation coefficient can be detected by ultracentrifugation combined to absorption optical devices. The sedimentation and concentration of each component are measured with a wavelength of 350 nm. An exemplary measurement technique for determining the particles in the asphalt mix composition is described hereinbelow.

The determination of particles in the asphalt mix composition is carried out by fractionation experiments using analytical ultracentrifugation. Sedimentation velocity runs using a Beckman Optima XL-I (Beckman Instruments, Palo Alto, USA) can be performed. The integrated scanning UV/VIS absorbance optical system is used. A wavelength of 350 nm is chosen, with the samples measured at a concentration of about 0.2g/l after dilution in a white spirit solvent (CAS-Nr.:64742-82-1). In order to detect the soluble and insoluble parts, centrifugation speed is varied from 1000 rpm to 55,000 rpm. The distribution of sedimentation coefficients, defined as the weight fraction of species with a sedimentation coefficient between s and s + ds, and the concentration of one sedimenting fraction are determined using a standard analysis Software (for e.g. SEDFIT). The change of the whole radial concentration profile with time is recorded and converted in distributions of sedimentation coefficient g(s). The sedimentation coefficient is in units of Sved (1Sved = 10-13 seconds). The particles in the asphalt mix composition are determined by quantifying the light absorption of the fast and slow sedimenting fractions at the used wavelength.

### Use

In yet another aspect, the presently claimed invention is directed to use of an asphalt mix composition for pavement applications.

In yet another aspect, the presently claimed invention is directed to use of an asphalt mix composition for weatherproofing applications.

Preferably, the weatherproofing application is roofing application.

The asphalt composition of (1) for use in weatherproofing applications, is preferably reformulated with suitable well-known additives such as fillers, binders, preservatives, pigments among others to form a weatherproofing material. Said material is preferably selected from
- paints and coatings, particularly for waterproofing,
- mastics for filling joints and sealing cracks,
- grouts and hot-poured surfaces for surfacing of roads, aerodromes, sports grounds, etc.,
- asphalt emulsion,
- hot coatings for surfacing as above,
- surface coatings for surfacing,
- shingles.

Or any combination of two or more of the aforementioned.

More preferably the weatherproofing material is a shingle for roofing application. Roofing shingles are a roof covering consisting of individual overlapping elements. These elements may be flat, rectangular shapes laid in courses from the bottom edge of the roof up, with each successive course overlapping the joints below.

The process according to the invention is illustrated in more detail by the accompanying figures.

Figure 1 shows influence of various impellers on reaction rates obtained using computation fluid dynamic simulations. Graphical depictions of reaction times versus average axial velocity, average radial velocity and average shear are provided herein. Measurements were done at mixing power of 1.5 W/kg and in tanks equipped with baffles.

Figure 2 shows a schematic representation of the plant for carrying out the process of the invention. The plant comprises a first tank fitted with an impeller (anchor impeller shown in figure 2).

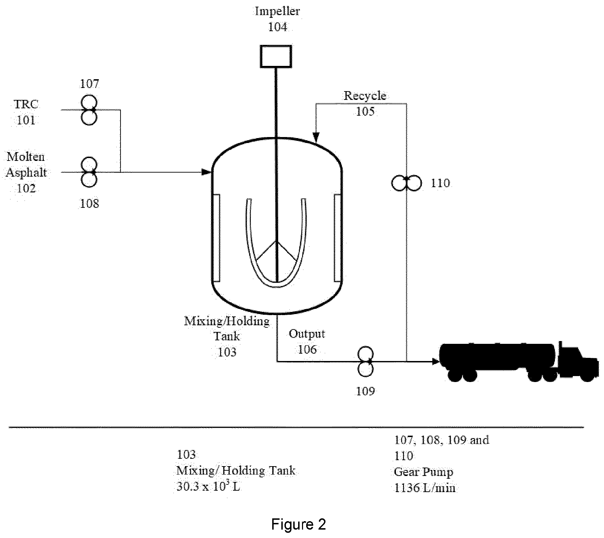

As shown in figure 2, the asphalt composition of (1) is heated to a temperature of 185 °C and the molten asphalt is introduced into the first tank (103) fitted with an impeller (104) (first input stream 102) by means of a pump (108). The molten asphalt is obtained by heating the asphalt composition of (1). Thermosetting reactive compound (or TRC) is also introduced into the tank (second input stream 101) by means of a pump (107). The first and second input stream are homogenized in first tank (103). An output stream (106) withdrawn from bottom of first tank is introduced directly to a transportation truck by means of a pump (108). A recycle stream (105) is provided for introducing output obtained from the bottom of the first tank into the first tank by means of a pump (109). Herein, the pumps are set at rates as per operational requirement.

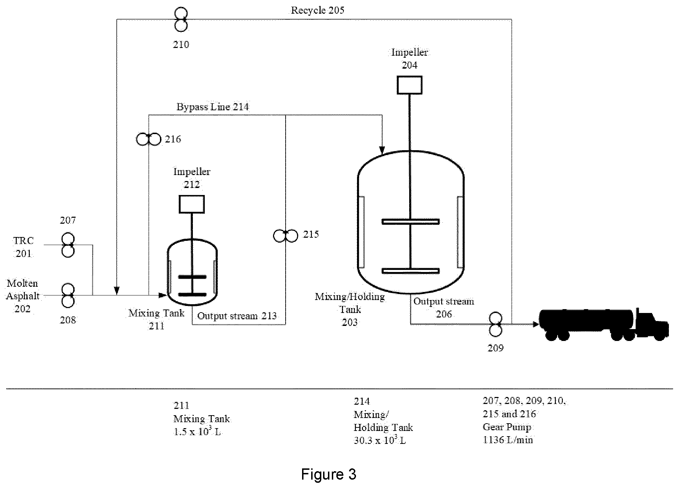

Figure 3 shows a schematic representation of the plant for carrying out the process of the invention comprising a first and second tank, each fitted with two stage impellers.

As shown in figure 3, the asphalt composition of (1) is heated to a temperature of 185 °C and the molten asphalt is introduced into the second tank (211) fitted with an impeller (212) (first input stream 202) by means of a pump (208). The molten asphalt is obtained by heating the asphalt composition of (1). Thermosetting reactive compound is also introduced into the second tank (second input stream 201) by means of a pump (207). The first and second input stream are homogenized in second tank (211). A first output stream (213) withdrawn from bottom of second tank is introduced to the first tank (203) fitted with an impeller (204) by means of a pump (215). A bypass stream (214) is provided to directly introduce first and second stream into first tank by means of a pump (216). The first tank has 20 times the volumetric capacity of second tank and is operated at 1/3^{rd} the mixing power of second tank. An output stream (206) from bottom of first tank is introduced directly to a transportation truck by means of a pump (209). A recycle stream (205) is provided for introducing output obtained from the bottom of the first tank into the second tank by means of a pump (210). Herein, the pumps are set at rates as per operational requirement.

### EXAMPLES

The presently claimed invention is illustrated by the non-restrictive examples which are as follows:

### Raw materials

| **ASPHALT (SA)** | |
|---|---|
| SA | Asphalt having performance grade of 70/100 and 30/45 according to AASHTO - M320 |

| THERMOSETTING REACTIVE COMPOUND (TRC) | |
|---|---|
| TRC | Polymeric MDI with a functionality of 2.7 and NCO content ranging between 30 wt.% to 33 wt.%, obtained from BASF |

### Impeller selection using computational fluid dynamics

Computational fluid dynamic methodologies (using COMSOL version 5.6) were employed to identify the critical aspects associated impeller-based mixing of fluids within a tank.

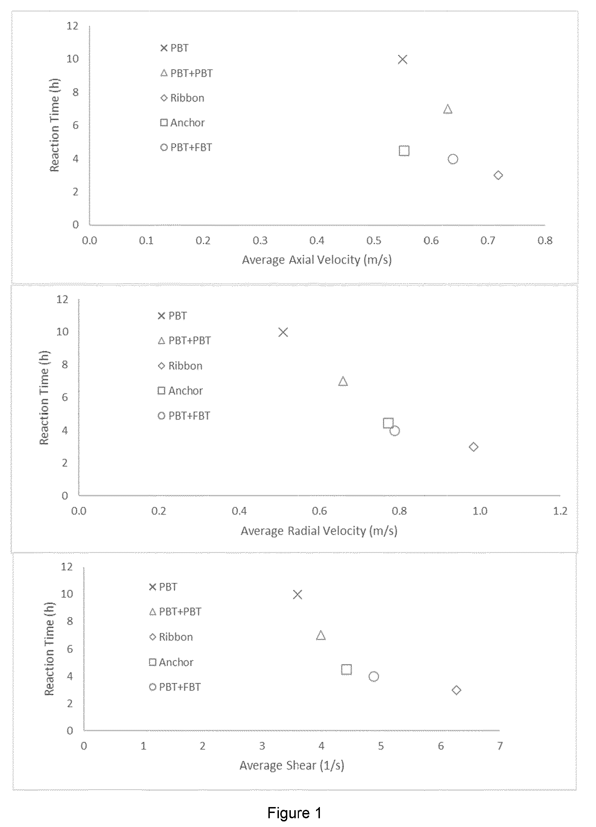

The adequate reaction between asphalt and thermosetting reactive compound during homogenization is determined by macro and micro-mixing events within tank. Herein, the mixing velocity (macro-mixing) and shear rate (micro-mixing) were identified as key aspects to improve reaction times. The results are identified for various impellers such as pitched blade turbine (PBT), flat blade turbine (FBT), 2-stage impeller combining PBT and FBT, anchor and ribbon in figure 1 and also tabulated in table 1 below. In order to ensure uniformity in assessment and also adherence to industry standards, all values computed on basis of tank fitted with baffles.

**Table 1**

| Parameters | PBT | | | PBT + PBT | | PBT + FBT | Ribbon | | | Anchor |
|---|---|---|---|---|---|---|---|---|---|---|
| Mixing power (W/kg) | 1.5 | 2.9 | 3.4 | 1.5 | 3.4 | 1.5 | 1.5 | 2.9 | 3.4 | 1.5 |
| Axial velocity (m/s) | 0.55 | 0.69 | 0.73 | 0.63 | 0.93 | 0.64 | 0.57 | 0.72 | 0.76 | 0.64 |
| Radial velocity (m/s) | 0.51 | 0.64 | 0.67 | 0.66 | 0.97 | 0.79 | 0.78 | 0.98 | 1.06 | 0.94 |
| Shear (1/s) | 3.6 | 4.6 | 4.86 | 3.99 | 5.92 | 4.88 | 5.0 | 6.27 | 6.61 | 5.2 |
| Reaction Time (hour) | 10* | - | - | 7 | 3.5 | 4 | 4* | 3 | - | 3.75* |

| | | | | | | | | | | |
|---|---|---|---|---|---|---|---|---|---|---|
| *Computationally estimated | | | | | | | | | | |

It was noted from above table and Figure 1 that the threshold between 0.2 and 0.5 m/s in axial mixing velocity must be met to begin improving reaction time. Furthermore, it was noted that the optimal macromixing is achievable with axial velocity > 0.4 m/s and radial velocity and > 0.65 m/s, respectively. Here, it was identified that PBT (when employed singly in absence of baffles), yielded high radial velocities with abnormally low axial velocities. Optimal micro-mixing is achievable with shear rate > 3.5 s⁻¹. Above ranges were noted to ensure optimal power consumption (< 3 W/kg). Therefore, said ranges were identified as critical for selecting suitable impellers for achieving optimal reaction times.

### Analysis of reaction times

The asphalt composition (first input stream) is mixed with 2 wt. % thermosetting reactive compound (second input stream) and is run up to temperatures as defined in table 1 below. Higher temperatures (above 190°C) was identified to result in unwanted odour and production of VOCs. All lab experiments were completed in a batch Parr reactor (first tank) equipped with suitable impellers as listed in table 2 below. Operating conditions such as mixing power are outlined in table 1 below. The NCO concentration was checked regularly, and end point was identified to be when the NCO is < 0.1%. The incorporation of baffles was noted to improve radial mixing. Experimental results for various impellers are shown in table 2 below.

**Table 2**

| Impeller | Diameter | Temp (°C) | Baffle | RPM | Power Number (experiment) | Mixing Power (W/kg) | Reaction Time (hour) |
|---|---|---|---|---|---|---|---|
| PBT | 2.248 | 148.9 | No | 660 | 1.96 | 2.88 | 19 |
| PBT | 2.248 | 176.7 | No | 660 | 1.96 | 2.88 | 12 |
| PBT+PBT | 2.248/2.0 | 148.9 | No | 660 | -- | 1.14 | 13 |
| PBT+PBT | 2.248 | 185 | Yes | 450 | -- | 1.45 | 7 |
| PBT+PBT | 2.248 | 185 | Yes | 700 | 2.07 | 4.63 | 3.5 |
| FBT | 1.969 | 176.7 | No | 660 | -- | 1.59 | 8 |
| PBT+FBT | 2.248/ 2.4285 | 176.7 | No | 500 | 1.48 | 1.49 | 4 |
| Ribbon | 2.372 | 148.9 | No | 660 | -- | 19.7 | 7 |
| Ribbon | 2.372 | 176.7 | No | 400 | -- | 4.4 | 4.5 |
| Ribbon | 2.372 | 176.7 | No | 1000 | -- | 68 | <1 |
| Ribbon | 2.372 | 176.7 | Yes | 350 | 16.9 | 2.9 | 3 |
| Ribbon | 2.372 | 176.7 | No | 1000 →300 | -- | 68→1.9 | 4.3 |
| 2-staged holes | 2.5 | 176.7 | No | 660 | -- | -- | 11 |
| Rotor statorsq. hole | 1.3125 | 176.7 | No | 4000 | -- | 23.0 | 4.5 |
| Rotor statorsq. hole | 1.3125 | 176.7 | No | 8000 | -- | 183.7 | 4.5 |
| Rotor statorgeneral | 1.3125 | 185 | No | 6000 | -- | 77.5 | 2.5 |
| Butablade | 2.89 | 176.7 | No | 600 | 1.13 | 4.01 | 4 |
| PBT+ Butablade | 2.248/ 2.89 | 176.7 | No | 450 | 0.85 | 1.89 | 4 |
| Chevron (up)+PBT | 2.248 | 185 | Yes | 450 | 1.49 | 0.64 | 6 |
| Chevron (down)+PBT | 2.248 | 185 | Yes | 600 | -- | -- | 6 |
| Anchor | 2.298 | 185 | Yes | 350 | 3.79 | 0.85 | 4.5 |
| Anchor | 2.298 | 185 | No | 1000 →300 | 3.79 | 19.80→0.5 3 | 4 |

| | | | | | | | |
|---|---|---|---|---|---|---|---|
| Note- all experiments done with 600 grams except rotor stator (400 grams); lab power number at laminar regime (Reynolds number, Rₑ~100); | | | | | | | |

Reaction times are influenced by a number of factors such as mixing power, temperature and rpm. An increase in one or more of these factors was identified to result in shorter reactions times. Since, high shear rate and total mixing within the reactor are critical for the reaction rates, it was found that the mixing power influences reaction rate much more than temperature. However, in an effort to minimize power consumption (< 4 W/kg mixing power), it was surprisingly found that with careful selection of impellers a further shortening of reaction times (≤ 6 hours) was possible. From table 2 above, it is noted that ribbon impellers provide the best mixing and reaction times due to total mixing movement in the reactor at minimum power consumption, i.e. low mixing power. For instance, the reaction time was 3 hours at mixing power of 3 W/kg. Anchor impeller also yielded promising results, using it the reaction could be completed at 4.5 hours at relatively low mixing power of 0.85 W/kg. Additionally, it is also designed for viscous solutions. Additionally, in-line mixers were found to be incompatible with high viscosity liquid such as asphalt. Also, mixing power in some cases was varied after 10 min indicated with arrow in Table 2, for e.g., 68→1.9 refers to a 10 min regime at 68 W/kg power followed by 1.9 W/kg. The said step-wise mixing regime provides exemplary support for the multi-tank system described hereinabove, wherein the second tank is a low volume high power (second) tank that is upstream of the larger (first) tank.

Yet another alternate is to have multiple impeller system such as two-staged impellers. Multiple staged PBTs can give more circulation and energy dissipation than a single stage PBT. Two PBTs give a reaction time of 7 hours with mixing power of 1.5 W/kg. However, when the bottom impeller was replaced with a FBT, the combination surprisingly led to an increased overall circulation with improved shear rates. Consequently, the reaction time was found to be lower (4 hours) at the same mixing power (1.5 W/kg). Additionally, using PBT/FBT, the reaction was completed without a baffle and at lower temperature of 176.7 °C itself. Furthermore, both double PBT and PBT/FBT represent economically feasible options for large-scale implementation.

Rotor stator mixers allow for high intensity and high shear mixing. Experiments were completed with the square hole work head, which has the highest shear but lowest flowrates. As a result, the rotor stator only provided localized movement of the liquid. Even at increased mixing speed (4000 to 8000 rpm), there was no difference to the reaction time and the reaction performance was not as good as the ribbon impeller. Surprisingly, the general-purpose work head (with low shear but high flow rate) improved the mixing time to 2.5 hours. These may be preferably employed as part of second tank.

## Claims

1. A process for the preparation of an asphalt mix composition, said process comprising:
(1) heating an asphalt composition to a temperature in the range of from 110 to 190 °C to obtain a first input stream (102,);
(2) providing one or more thermosetting reactive compounds to obtain a second input stream (101,201); and
(3) homogenizing the streams of (1) and (2) in at least a first tank (103,203) fitted with a first impeller (104,204),
**characterized in that**
the impeller (104,204) allows an axial velocity > 0.4 m/s, a radial velocity > 0.65 m/s, and a shear rate > 3.5 s-¹; and
homogenization of (3) is carried out at a mixing power < 3 W/kg.

2. The process of claim 1, wherein the homogenization of (3) is carried out for a duration in the range of from 0.1 to 10 hours.

3. The process of any of preceding claims, wherein the homogenization of (3) is carried out at a rate in the range of from 400 to 9000 rpm.

4. The process of any of preceding claims, wherein the homogenizing the streams of (1) and (2) occurs in a second tank (211) fitted with a second impeller (212) located upstream to the first tank (103,203) and in fluid communication with the first tank (103,203).

5. The process of any of preceding claims, wherein the first input stream (102,202) and second input stream (101,201) are preferably simultaneously fed into first tank (103,203) or second tank (211).

6. The process of claim 4, wherein the second tank (211) is operated at higher mixing power than first tank (203).

7. The process of any of preceding claims, wherein the first impeller (104,204) and second impeller (212) are selected independently from each other from pitched blade turbine, flat blade turbine, chevron, ribbon, anchor, Rushton turbine, or combinations thereof.

8. The process of any of preceding claims, wherein the first tank (103,203) and/or second tank (211) further comprise at least one baffle.

9. The process of any of preceding claims, wherein first impeller (104,204) and/or second impeller (212) comprise at least one axial flow blade and at least one radial flow blade.

10. The process of any of preceding claims, wherein the first impeller (104,204) and/or second impeller (212) is a combination of pitched blade turbine and flat blade turbine, or wherein the first impeller (104,204) and/or second impeller (212) is anchor.

11. The process of any of preceding claims, wherein the weight ratio of the total amount of thermosetting reactive compounds of (2) to the asphalt composition of (1) is in the range of from 0.1 : 99.9 to 25 : 75.

12. The process of any of preceding claims, wherein the total amount of thermosetting reactive compounds in the asphalt mix composition is 0.1 to 10.0 wt.-% based on the total weight of the mix composition.

13. The process of any of preceding claims, wherein the thermosetting reactive compounds comprise one or more compounds selected from isocyanates, epoxy resins, melamine formaldehyde resins, or mixtures of two or more thereof, preferably one or more compounds selected from aliphatic isocyanates, aromatic isocyanates, or mixtures thereof.

14. The process of claim 13, wherein the aliphatic isocyanates comprise one or more compounds selected from 1,12-dodecanediioscyanate, 2-ethyltetramethylenediisocyanate-1,4, 2-methylpentamethylenediisocyanate-1,5, tetramethylenediisocyanate-1,4, hexamethylenediisocyanate-1,6, trimethyl diisocyanate, tetramethyl diisocyanate, pentamethyl diisocyanate, hexamethyl diisocyanate, heptamethyl diisocyanate, octamethyl diisocyanate, 2-methylpentamethylene-1,5-diisocyanate, 2-ethylbutylene-1,4-diisocyanate, pentamethylene-1,5-diisocyanate, butylene-1,4-diisocyanate, or mixtures of two or more thereof, and/or
wherein the aliphatic isocyanates comprise one or more cycloaliphatic compounds selected from 1-isocyanato-3,3,5-trimethyl-5-iso-cyanatomethyl-cyclohexane (isophorone diisocyanate, IPDI), 1,4-Bis(isocyanatomethyl)cyclohexane and/or 1,3-Bis(isocyanatomethyl)cyclohexane (HXDI), 1,4-cyclohexane diisocyanate, 1-methyl-2,4- and/or -2,6-cyclohexane diisocyanate and 4,4'-dicyclohexylmethane diisocyanate, 2,2'-dicyclohexylmethane diisocyanate, 2,4'-dicyclohexylmethane diisocyanate, cyclohexane-1,3- diisocyanate, cyclohexane-1,4- diisocyanate, 2,4- hexahydrotoluene diisocyanate, 2,6-hexahydrotoluene diisocyanate, 4,4'-dicyclohexylmethane diisocyanate, 2,2'-dicyclohexylmethane diisocyanate, 2,4'-dicyclohexylmethane diisocyanate, or mixtures of two or more thereof.

15. The process of claim 13, wherein the aromatic isocyanates comprise one or more compounds selected from 2,4-toluene diisocyanate, 2,6-toluene diisocyanate, 4,4'-diphenylmethane diisocyanate, 2,4'-diphenylmethane diisocyanate, 2,2'-diphenylmethane diisocyanate, 1,5-naphthylene diisocyanate, 3,3'-dimethyl diphenyl diisocyanate, 1,2-diphenylethane diisocyanate, p-phenylene diisocyanate, or mixtures of two or more thereof.

16. The process of any of preceding claims, wherein the thermosetting reactive compounds is polymeric MDI and the total amount of 4,4'-MDI in the polymeric MDI is in the range of from 26 to 98 wt.-% based on 100 wt.-% of the thermosetting reactive compounds.

17. The process of any of preceding claims, wherein the thermosetting reactive compounds have an average isocyanate functionality of from 2.1 to 3.5.

18. The process of any of the preceding claims, wherein the stream of (1) further comprises a granular material, wherein the granular material is preferably pre-heated in the range of from 110 to 240 °C before being introduced into first input stream (1).

19. The process of claim 18, wherein the granular material comprises one or more granular materials selected from gravel, reclaimed asphalt pavement, sand, one or more filler materials, or mixtures of two or more thereof.

20. The process of claims 18 or 19, wherein the weight ratio of the asphalt mix composition obtained in (3) to the granular material is in the range of from 0.5 : 99.5 to 25 : 75.

21. The process of any the preceding claims, wherein the asphalt composition of (1) has a needle penetration selected from the list consisting of 20-30, 30-45, 35-50, 40-60, 50-70, 70-100, 100-150, 160-220, and 250-330, more preferably from the list consisting of 30-45, 35-50, 40-60, 50-70, 70-100, 100-150, and 160-220, more preferably from the list consisting of 40-60, 50-70, 70-100, and 100-150, wherein more preferably the asphalt composition of (1) has a needle penetration of 50-70 or 70-100, wherein the needle penetration is determined according to DIN EN 1426.

22. The process of any the preceding claims, wherein asphalt composition of (1) comprises bitumen modified with one or more compounds selected from thermoplastic elastomers, latex, thermoplastic polymers, thermosetting polymers, or mixtures of two or more thereof, wherein the thermoplastic elastomers are preferably selected from styrene butadiene elastomer (SBE), styrene butadiene styrene (SBS), styrene butadiene rubber (SBR), styrene isoprene styrene (SIS), styrene ethylene butadiene styrene (SEBS), ethylene propylene diene terpolymer (EPDT), isobutene isoprene copolymer (IIR), polyisobutene (PIB), polybutadiene (PBD), polyisoprene (PI), or mixtures of two or more thereof.

23. The process of any the preceding claims, wherein the asphalt composition of (1) comprises one or more additives.

## Patentansprüche

1. Verfahren zur Herstellung einer Asphaltgemischzusammensetzung, wobei das Verfahren umfasst:
(1) Erhitzen einer Asphaltzusammensetzung auf eine Temperatur in dem Bereich von 110 bis 190 °C, um einen ersten Eingangsstrom (102) zu erhalten;
(2) Bereitstellen einer oder mehrerer wärmehärtbarer reaktiver Verbindungen, um einen zweiten Eingangsstrom (101, 201) zu erhalten; und
(3) Homogenisieren der Ströme von (1) und (2) in wenigstens einem ersten Tank (103, 203), der mit einem ersten Flügelrad (104, 204) ausgestattet ist,
**dadurch gekennzeichnet, dass**
das Flügelrad (104, 204) eine axiale Geschwindigkeit > 0,4 m/s, eine radiale Geschwindigkeit > 0,65 m/s und eine Scherrate > 3,5 s-¹ ermöglicht; und
die Homogenisierung von (3) bei einer Mischleistung < 3 W/kg durchgeführt wird.

2. Verfahren nach Anspruch 1, wobei die Homogenisierung von (3) für eine Dauer in dem Bereich von 0,1 bis 10 Stunden durchgeführt wird.

3. Verfahren nach einem der vorstehenden Ansprüche, wobei die Homogenisierung von (3) mit einer Geschwindigkeit in dem Bereich von 400 bis 9000 U/min durchgeführt wird.

4. Verfahren nach einem der vorstehenden Ansprüche, wobei das Homogenisieren der Ströme von (1) und (2) in einem zweiten Tank (211) erfolgt, der mit einem zweiten Flügelrad (212) ausgestattet ist, das stromaufwärts des ersten Tanks (103, 203) angeordnet ist und in Fluidverbindung mit dem ersten Tank (103, 203) steht.

5. Verfahren nach einem der vorstehenden Ansprüche, wobei der erste Eingangsstrom (102, 202) und der zweite Eingangsstrom (101, 201) vorzugsweise gleichzeitig in den ersten Tank (103, 203) oder zweiten Tank (211) eingespeist werden.

6. Verfahren nach Anspruch 4, wobei der zweite Tank (211) mit höherer Mischleistung als der erste Tank (203) betrieben wird.

7. Verfahren nach einem der vorstehenden Ansprüche, wobei das erste Flügelrad (104, 204) und das zweite Flügelrad (212) unabhängig voneinander ausgewählt sind aus Turbine mit schrägen Schaufeln, Turbine mit flachen Schaufeln, Chevron, Band, Anker, Rushton-Turbine oder Kombinationen davon.

8. Verfahren nach einem der vorstehenden Ansprüche, wobei der erste Tank (103, 203) und/oder der zweite Tank (211) ferner wenigstens eine Ablenkplatte umfassen.

9. Verfahren nach einem der vorstehenden Ansprüche, wobei das erste Flügelrad (104, 204) und/oder das zweite Flügelrad (212) wenigstens eine axiale Strömungsschaufel und wenigstens eine radiale Strömungsschaufel umfassen.

10. Verfahren nach einem der vorstehenden Ansprüche, wobei das erste Flügelrad (104, 204) und/oder das zweite Flügelrad (212) eine Kombination aus Turbine mit schrägen Schaufeln und Turbine mit flachen Schaufeln ist oder wobei das erste Flügelrad (104, 204) und/oder das zweite Flügelrad (212) Anker ist.

11. Verfahren nach einem der vorstehenden Ansprüche, wobei das Gewichtsverhältnis der Gesamtmenge an wärmehärtbaren reaktiven Verbindungen von (2) zu der Asphaltzusammensetzung von (1) in dem Bereich liegt von 0,1: 99,9 bis 25: 75.

12. Verfahren nach einem der vorstehenden Ansprüche, wobei die Gesamtmenge an wärmehärtbaren reaktiven Verbindungen in der Asphaltgemischzusammensetzung 0,1 bis 10,0 Gew.-%, bezogen auf das Gesamtgewicht der Gemischzusammensetzung, beträgt.

13. Verfahren nach einem der vorstehenden Ansprüche, wobei die wärmehärtbaren reaktiven Verbindungen eine oder mehrere Verbindungen ausgewählt aus Isocyanaten, Epoxyharzen, Melaminformaldehydharzen oder Gemischen von zwei oder mehr davon umfassen, vorzugsweise eine oder mehrere Verbindungen ausgewählt aus aliphatischen Isocyanaten, aromatischen Isocyanaten oder Gemischen davon.

14. Verfahren nach Anspruch 13, wobei die aliphatischen Isocyanate eine oder mehrere Verbindungen ausgewählt aus 1,12-Dodecandiioscyanat, 2-Ethyltetramethylendiisocyanat-1,4, 2-Methylpentamethylendiisocyanat-1,5, Tetramethylendiisocyanat-1,4, Hexamethylendiisocyanat-1,6, Trimethyldiisocyanat, Tetramethyldiisocyanat, Pentamethyldiisocyanat, Hexamethyldiisocyanat, Heptamethyldiisocyanat, Octamethyldiisocyanat, 2-Methylpentamethylen-1,5-diisocyanat, 2-Ethylbutylen-1,4-diisocyanat, Pentamethylen-1,5-diisocyanat, Butylen-1,4-diisocyanat oder Gemischen von zwei oder mehr davon umfassen und/oder
wobei die aliphatischen Isocyanate eine oder mehrere cycloaliphatische Verbindungen ausgewählt aus 1-Isocyanato-3,3,5-trimethyl-5-isocyanatomethylcyclohexan (Isophorondiisocyanat, IPDI), 1,4-Bis(isocyanatomethyl)cyclohexan und/oder 1,3-Bis(isocyanatomethyl)cyclohexane (HXDI), 1,4-Cyclohexandiisocyanat, 1-Methyl-2,4- und/oder -2,6-cyclohexandiisocyanat und 4,4'-Dicyclohexylmethandiisocyanat, 2,2'-Dicyclohexylmethandiisocyanat, 2,4'-Dicyclohexylmethandiisocyanat, Cyclohexan-1,3-diisocyanat, Cyclohexan-1,4-diisocyanat, 2,4-Hexahydrotoluoldiisocyanat, 2,6-Hexahydrotoluoldiisocyanat, 4,4'-Dicyclohexylmethandiisocyanat, 2,2'-Dicyclohexylmethandiisocyanat, 2,4'-Dicyclohexylmethandiisocyanat oder Gemischen von zwei oder mehr davon umfassen.

15. Verfahren nach Anspruch 13, wobei die aromatischen Isocyanate eine oder mehrere Verbindungen ausgewählt aus 2,4-Toluoldiisocyanat, 2,6-Toluoldiisocyanat, 4,4'-Diphenylmethandiisocyanat, 2,4'-Diphenylmethandiisocyanat, 2,2'-Diphenylmethandiisocyanat, 1,5-Naphthylendiisocyanat, 3,3'-Dimethyldiphenyldiisocyanat, 1,2-Diphenylethandiisocyanat, p-Phenylendiisocyanat oder Gemischen aus zwei oder mehr davon umfassen.

16. Verfahren nach einem der vorstehenden Ansprüche, wobei die wärmehärtbaren reaktiven Verbindungen polymeres MDI sind und die Gesamtmenge an 4,4'-MDI in dem polymeren MDI in dem Bereich von 26 bis 98 Gew.-%, bezogen auf 100 Gew.-% der wärmehärtbaren reaktiven Verbindungen, liegt.

17. Verfahren nach einem der vorstehenden Ansprüche, wobei die wärmehärtbaren reaktiven Verbindungen eine mittlere Isocyanatfunktionalität von 2,1 bis 3,5 aufweisen.

18. Verfahren nach einem der vorstehenden Ansprüche, wobei der Strom von (1) ferner ein körniges Material umfasst, wobei das körnige Material vorzugsweise in dem Bereich von 110 bis 240 °C vorgewärmt wird, bevor es in den ersten Eingangsstrom (1) eingeführt wird.

19. Verfahren nach Anspruch 18, wobei das körnige Material ein oder mehrere körnige Materialien ausgewählt aus Kies, rückgewonnenem Asphaltbelag, Sand, einem oder mehreren Füllstoffen oder Gemischen von zwei oder mehr davon umfasst.

20. Verfahren nach Anspruch 18 oder 19, wobei das Gewichtsverhältnis der in (3) erhaltenen Asphaltgemischzusammensetzung zu dem körnigen Material in dem Bereich liegt von 0,5: 99,5 bis 25: 75.

21. Verfahren nach einem der vorstehenden Ansprüche, wobei die Asphaltzusammensetzung von (1) eine Nadelpenetration ausgewählt aus der Liste bestehend aus 20-30, 30-45, 35-50, 40-60, 50-70, 70-100, 100-150, 160-220 und 250-330, bevorzugter aus der Liste bestehend aus 30-45, 35-50, 40-60, 50-70, 70-100, 100-150 und 160-220, bevorzugter aus der Liste bestehend aus 40-60, 50-70, 70-100 und 100-150 aufweist, wobei bevorzugter die Asphaltzusammensetzung von (1) eine Nadelpenetration von 50-70 oder 70-100 aufweist, wobei die Nadelpenetration nach DIN EN 1426 bestimmt wird.

22. Verfahren nach einem der vorstehenden Ansprüche, wobei die Asphaltzusammensetzung von (1) Bitumen umfasst, das mit einer oder mehreren Verbindungen modifiziert ist, die ausgewählt sind aus thermoplastischen Elastomeren, Latex, thermoplastischen Polymeren, wärmehärtbaren Polymeren oder Gemischen von zwei oder mehr davon, wobei die thermoplastischen Elastomere vorzugsweise ausgewählt sind aus Styrol-Butadien-Elastomer (SBE), Styrol-Butadien-Styrol (SBS), Styrol-Butadien-Kautschuk (SBR), Styrol-Isopren-Styrol (SIS), Styrol-Ethylen-Butadien-Styrol (SEBS), Ethylen-Propylen-Dien-Terpolymer (EPDT), Isobuten-Isopren-Copolymer (IIR), Polyisobuten (PIB), Polybutadien (PBD), Polyisopren (PI) oder Gemischen von zwei oder mehr davon.

23. Verfahren nach einem der vorstehenden Ansprüche, wobei die Asphaltzusammensetzung von (1) einen oder mehrere Zusatzstoffe umfasst.

## Revendications

1. Procédé pour la préparation d'une composition de mélange d'asphalte, ledit procédé comprenant :
(1) le chauffage d'une composition d'asphalte jusqu'à une température dans la plage de 110 à 190 °C pour obtenir un premier flux d'entrée (102) ;
(2) la fourniture d'un ou plusieurs composés réactifs thermodurcissables pour obtenir un second flux d'entrée (101,201) ; et
(3) l'homogénéisation des flux de (1) et (2) dans au moins un premier réservoir (103, 203) muni d'un premier rotor (104,204),
**caractérisé en ce que**
le rotor (104, 204) permet une vitesse axiale > 0,4 m/s, une vitesse radiale > 0,65 m/s et une vitesse de cisaillement > 3,5 s-¹ ; et
l'homogénéisation de (3) est effectuée à une puissance de mélange < 3 W/kg.

2. Procédé selon la revendication 1, dans lequel l'homogénéisation de (3) est effectuée pendant une durée dans la plage de 0,1 à 10 heures.

3. Procédé selon l'une quelconque des revendications précédentes, dans lequel l'homogénéisation de (3) est effectuée à une vitesse dans la plage de 400 à 9 000 tpm.

4. Procédé selon l'une quelconque des revendications précédentes, dans lequel l'homogénéisation des fluxs de (1) et (2) a lieu dans un second réservoir (211) équipé d'un second rotor (212) situé en amont du premier réservoir (103, 203) et en communication fluidique avec le premier réservoir (103, 203).

5. Procédé selon l'une quelconque des revendications précédentes, dans lequel le premier flux d'entrée (102, 202) et le second flux d'entrée (101, 201) sont de préférence introduits simultanément dans le premier réservoir (103, 203) ou le second réservoir (211).

6. Procédé selon la revendication 4, dans lequel le second réservoir (211) fonctionne à une puissance de mélange supérieure à celle du premier réservoir (203).

7. Procédé selon l'une quelconque des revendications précédentes, dans lequel le premier rotor (104, 204) et le second rotor (212) sont choisis indépendamment l'un de l'autre parmi une turbine à pales inclinées, une turbine à pales plates, un chevron, un ruban, une ancre, une turbine Rushton ou des combinaisons correspondantes.

8. Procédé selon l'une quelconque des revendications précédentes, dans lequel le premier réservoir (103, 203) et/ou le second réservoir (211) comprennent en outre au moins une chicane.

9. Procédé selon l'une quelconque des revendications précédentes, dans lequel le premier rotor (104, 204) et/ou le second rotor (212) comprennent au moins une pale d'écoulement axial et au moins une pale d'écoulement radial.

10. Procédé selon l'une quelconque des revendications précédentes, dans lequel le premier rotor (104, 204) et/ou le second rotor (212) est une combinaison d'une turbine à pales inclinées et d'une turbine à pales plates, ou dans lequel le premier rotor (104, 204) et/ou le second rotor (212) est une ancre.

11. Procédé selon l'une quelconque des revendications précédentes, dans lequel le rapport pondéral de la quantité totale de composés réactifs thermodurcissables de (2) sur la composition d'asphalte de (1) est dans la plage de 0,1 : 99,9 à 25 : 75.

12. Procédé selon l'une quelconque des revendications précédentes, dans lequel la quantité totale de composés réactifs thermodurcissables dans la composition de mélange d'asphalte est de 0,1 à 10,0 % en poids sur la base du poids total de la composition de mélange.

13. Procédé selon l'une quelconque des revendications précédentes, dans lequel les composés réactifs thermodurcissables comprennent un ou plusieurs composés choisis parmi les isocyanates, les résines époxy, les résines de mélamine formaldéhyde, ou des mélanges de deux ou plus de ceux-ci, de préférence un ou plusieurs composés choisis parmi des isocyanates aliphatiques, des isocyanates aromatiques, ou leurs mélanges.

14. Procédé selon la revendication 13, dans lequel les isocyanates aliphatiques comprennent un ou plusieurs composés choisis parmi le 1,12-dodécanediioscyanate, 2-éthyltétraméthylènediisocyanate-1,4, 2-méthylpentaméthylènediisocyanate-1,5, tétraméthylènediisocyanate-1,4, hexaméthylènediisocyanate-1,6, diisocyanate de triméthyle, diisocyanate de tétraméthyle, diisocyanate de pentaméthyle, diisocyanate d'hexaméthyle, diisocyanate de heptaméthyle, diisocyanate d'octaméthyle, 1,5-diisocyanate de 2-méthylpentaméthylène, 1,4-diisocyanate de 2-éthylbutylène, 1,5-diisocyanate de pentaméthylène, 1,4-diisocyanate de butylène, ou des mélanges de deux ou plusieurs de ceux-ci, et/ou
dans lequel les isocyanates aliphatiques comprennent un ou plusieurs composés cycloaliphatiques choisis parmi le 1-isocyanato-3,3,5-triméthyl-5-iso-cyanatométhylcyclohexane (diisocyanate d'isophorone, IPDI), 1,4-bis(isocyanatométhyl)cyclohexane et/ou 1,3-bis(isocyanatométhyl)cyclohexane (HXDI), diisocyanate de 1,4-cyclohexane, 1-méthyl-2,4- et/ou -2,6-diisocyanate de cyclohexane et diisocyanate de 4,4'-dicyclohexylméthane, diisocyanate de 2,2'-dicyclohexylméthane, diisocyanate de 2,4'-dicyclohexylméthane, 1,3-diisocyanate de cyclohexane, 1,4-diisocyanate de cyclohexane, 2,4-diisocyanate d'hexahydrotoluène, 2,6-diisocyanate d'hexahydrotoluène, 4,4'-diisocyanate de dicyclohexylméthane, 2,2'-diisocyanate de dicyclohexylméthane, 2,4'-diisocyanate de dicyclohexylméthane, ou des mélanges de deux ou plus de ceux-ci.

15. Procédé selon la revendication 13, dans lequel les isocyanates aromatiques comprennent un ou plusieurs composés choisis parmi le 2,4-diisocyanate de toluène, 2,6-diisocyanate de toluène, 4,4'-diisocyanate de diphénylméthane, 2,4'-diisocyanate de diphénylméthane, 2,2'-diisocyanate de diphénylméthane, 1,5-diisocyanate de naphtylène, 3,3'-diisocyanate de diméthyldiphényle, 1,2-diisocyanate de diphényléthane, diisocyanate de p-phénylène ou des mélanges de deux ou plus de ceux-ci.

16. Procédé selon l'une quelconque des revendications précédentes, dans lequel les composés réactifs thermodurcissables sont du MDI polymérique et la quantité totale de 4,4'-MDI dans le MDI polymérique est dans la plage de 26 à 98 % en poids sur la base de 100 % en poids des composés réactifs thermodurcissables.

17. Procédé selon l'une quelconque des revendications précédentes, dans lequel les composés réactifs thermodurcissables ont une fonctionnalité moyenne d'isocyanate de 2,1 à 3,5.

18. Procédé selon l'une quelconque des revendications précédentes, dans lequel le flux de (1) comprend en outre un matériau granulaire, dans lequel le matériau granulaire est de préférence préchauffé dans la plage de 110 à 240 °C avant d'être introduit dans le premier flux d'entrée (1).

19. Procédé selon la revendication 18, dans lequel le matériau granulaire comprend un ou plusieurs matériaux granulaires choisis parmi le gravier, un revêtement asphaltique récupéré, le sable, un ou plusieurs matériaux de charge, ou des mélanges de deux ou plus de ceux-ci.

20. Procédé selon la revendication 18 ou 19, dans lequel le rapport pondéral de la composition de mélange d'asphalte obtenue en (3) sur le matériau granulaire est dans la plage de 0,5 : 99,5 à 25 : 75.

21. Procédé selon l'une quelconque des revendications précédentes, dans lequel la composition d'asphalte de (1) a une pénétration d'aiguille choisie dans la liste constituée par 20-30, 30-45, 35-50, 40-60, 50-70, 70-100, 100-150, 160-220, et 250-330, plus préférablement dans la liste constituée par 30-45, 35-50, 40-60, 50-70, 70-100, 100-150, et 160-220, plus préférablement dans la liste constituée par 40-60, 50-70, 70-100, et 100-150, dans lequel plus préférablement la composition d'asphalte de (1) a une pénétration d'aiguille de 50-70 ou 70-100, dans lequel la pénétration d'aiguille est déterminée selon la norme DIN EN 1426.

22. Procédé selon l'une quelconque des revendications précédentes, dans lequel la composition d'asphalte de (1) comprend du bitume modifié par un ou plusieurs composés choisis parmi des élastomères thermoplastiques, un latex, des polymères thermoplastiques, des polymères thermodurcissables, ou des mélanges de deux ou plus de ceux-ci, dans lequel les élastomères thermoplastiques sont de préférence choisis parmi un élastomère styrène butadiène (SBE), un styrène butadiène styrène (SBS), un caoutchouc styrène butadiène (SBR), un styrène isoprène styrène (SIS), un styrène éthylène butadiène styrène (SEBS), un terpolymère d'éthylène propylène diène (EPDT), un copolymère d'isobutène isoprène (IIR), un polyisobutène (PIB), un polybutadiène (PBD), un polyisoprène (PI), ou des mélanges de deux ou plus de ceux-ci.

23. Procédé selon l'une quelconque des revendications précédentes, dans lequel la composition d'asphalte de (1) comprend un ou plusieurs additifs.
